# EUROPEAN PATENT SPECIFICATION

(11) **EP 3 014 792 B1**
(45) Date of publication and mention of the grant of the patent: **06.05.2020**
(21) Application number: 14726461.8
(22) Date of filing: 01.04.2014
(51) Int. Cl.: H04B 10/112, H04B 7/185

(54) **FREE-SPACE OPTICAL MESH NETWORK**
OPTISCHES FREIFLÄCHEN-MESH-NETZWERK
RÉSEAU À MAILLAGE OPTIQUE EN ESPACE LIBRE

(30) Priority: 25.06.2013 US 201361839045 P; 01.11.2013 US 201314069464
(43) Date of publication of application: 04.05.2016
(73) Proprietor: Raytheon Company, Waltham, MA 02451-1449 (US)
(72) Inventor: MINISCALCO, William, J., Sudbury, MA 01776 (US)
(74) Representative: Jackson, Richard Eric
(86) International application number: PCT/US2014/032456
(87) International publication number: WO 2014/209457

(56) References cited:
- US-A1- 2002 051 269
- US-A1- 2009 214 216
- US-A1- 2013 156 432
- BO FU ET AL: "A Mesh in the Sky: A Routing Protocol for Airborne Networks", MILITARY COMMUNICATIONS CONFERENCE, 2007. MILCOM 2007. IEEE, IEEE, PISCATAWAY, NJ, USA, 29 October 2007 (2007-10-29), pages 1-7, XP031232457, ISBN: 978-1-4244-1512-0
- LI Y ET AL: "FREE-APACE OPTICAL INTERCONNECTS USING CONNECTIVITY-ENHANCED, MESH-BASED NETWORKS", OPTICAL ENGINEERING, SOC. OF PHOTO-OPTICAL INSTRUMENTATION ENGINEERS, BELLINGHAM, vol. 33, no. 5, 1 May 1994 (1994-05-01), pages 1532-1542, XP000440829, ISSN: 0091-3286, DOI: 10.1117/12.166526

## Description

### FIELD OF THE INVENTION

This invention relates generally to a free-space optical communication system and, more particularly, to a free-space optical mesh network.

### BACKGROUND OF THE INVENTION

Highly-connected radio frequency and microwave communication networks, commonly referred to as mesh networks, are known. Mesh networks provide high availability by maintaining a high degree of connectivity between nodes. Compared to RF communications, Free-Space Optical (FSO) communications provide higher data rates, lower probability of detection, and are less susceptible to jamming. In addition, FSO communications are not subject to spectrum usage limits. While RF mesh networks are widely used in tactical situations, FSO systems generally remain a collection of point-to-point links (node degree ≤ 2). Such low-connectivity systems may have high latency, low throughput, and poor resiliance as any single broken optical link may partition the network into disconnected segments.

Attempts have been made to achieve FSO networks having a higher node degree. Some systems provide multiple (N) optical terminals at each node (node degree = N). However, this approach does not scale in practice, as each increase in node degree requires an additional high-speed optical communications terminal and thus significantly increases the cost and size, weight, and power (SWaP) characteristics. It will be appreciated that a small aircraft or vehicle may support at most two optical communications terminals (node degree ≤ 2). Other systems may increase availability by providing an RF overlay network in addition to optical point-to-point links, wherein the RF network can provide backup and control capabilities. However, such hybrid networks do not actually achieve a higher optical node degree and thus may suffer from degraded data rates, higher probability of detection, and lower jam resistance when a single optical traffic link is broken. Therefore, there is a need for a FSO network with a high node degree and which requires a minimal number of optical communications terminals at each node.

US2009214216 A1 relates to a space-time division multiple-access (STDMA) laser communications (lasercom) system and related techniques

For further background, the article "A Mesh in the Sky: A Routing Protocol for Airborne Networks", by BO FU et. al. [MILITARY COMMUNICATIONS CONFERENCE, 2007. MILCOM 2007. IEEE, IEEE, PISCATAWAY, NJ, USA, 29 October 2007 (2007-10-29), pages 1-7, XP031232457, ISBN: 978-1-4244-1512-0], describes a cluster-based reactive routing protocol to alleviate the challenges in airborne network due to aircraft movement, which often results in intermittent links and can cause topology changes.

### SUMMARY OF THE INVENTION

The present disclosure provides a free-space optical mesh network, as defined by appended claim 1.

### BRIEF DESCRIPTION OF THE DRAWINGS

The foregoing features of the disclosure, as well as the disclosure itself may be more fully understood from the following detailed description of the drawings, in which:
FIG. 1A is a network diagram showing nodes and traffic links in an illustrative Free-Space Optical (FSO) mesh network;
FIG. 1B is a network diagram showing nodes, traffic links, and tracking links in an illustrative FSO mesh network;
FIG. 1C is a network diagram showing an RF overlay network in an illustrative FSO network;
FIG. 2 is a network diagram showing optical terminals in an illustrative FSO mesh network;
FIG. 3 is a block diagram showing an illustrative optical terminal for use in the network of FIGS. 1A and 1B;
FIG. 4 is a block diagram showing an illustrative optical bench for use in the optical terminal of FIG. 3;
FIGS. 5A-5C are pictorials collectively showing reconfiguration of traffic and tracking links in an illustrative FSO mesh network; and
FIGS. 6 is a flowchart illustrating reconfiguration of traffic links at one node in the FSO mesh network of FIGS. 5A-5C.

### DETAILED DESCRIPTION OF THE INVENTION

Before describing the present disclosure, some introductory concepts and terminology are explained. The term "node degree" is herein used to refer to the number of links terminating at a given node within a network. The term "mesh network" is herein used to refer to any network with a high node degree, generally greater than 2. The term "optical terminal" refers to any apparatus or device capable of transmitting and/or receving free-space optical beams. It will be appreciated that the optical terminals herein may further be capable of receiving data and/or tracking remote optical terminals. The terms "hop", "hopping", and "beam hopping" all generally refer to the process of repointing a transmitted free-space optical beam from a first direction to a second direction and/or reconfiguring an optical terminal to receive such a beam. The term "traffic link" refers to any communications link capable of carrying user data at a high data rate and may be either unidirectional or, more commonly, bidirectional. The term "tracking link" refers to an optical link used primarily for tracking the position of other terminals to the precision required for optical communications between them. The term "spatial acquisition" refers to the act of determining the direction of another node that is not currently being tracked with sufficient precision that it can be tracked. For discussion purposes the characteristics of a terminal located on a specific platform may be referred to in terms of its interaction with another terminal, referred to as the remote terminal, located on a distant platform. It should be noted that this terminology is relative and both terminals will generally have the same capabilities. The term "optical aperture" refers to the part of the terminal that controls the optical beams entering and exiting the terminal. Reference will be made herein to "RF overlay networks," however it should be understood that such overlay networks may utilize either radio frequency (RF) communications and/or microwave communications.

Embodiments of the disclosure will now be described in detail with reference to the drawing figures wherein like reference numerals identify similar or identical elements.

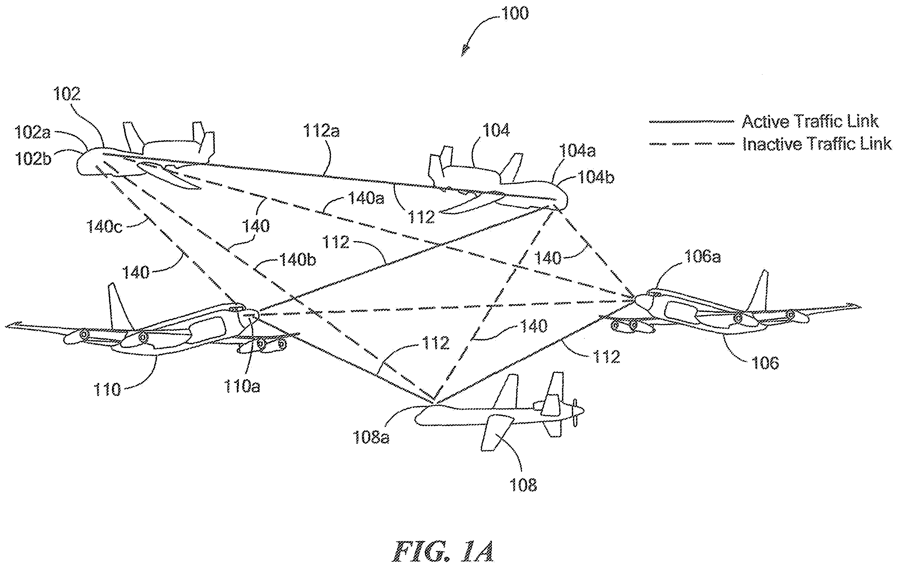

Referring to FIG. 1A, an illustrative Free-Space Optical (FSO) mesh network 100 includes nodes 102, 104, 106, 108, and 110, active traffic links 112, and inactive traffic links 140. In FIG. 1A, the nodes 102-110 are swhown as aircraft, however it will be appreciated that each node could be any structure capable of supporting an optical communications terminal as described herein. For example, each node could be a structure in geostationary orbit around Earth such as a satellite, an aerial vehicle such as a manned aircraft or an unmanned aerial vehicle (UAV), a land-based vehicle such as a tank, personnel carrier, or armored vehicle, or a sea-based vehicle such as a ship or submarine.

Each of nodes 102-110 has generally the same optical communications capabilities as every other node in the network 100. Thus, a discussion of any node will generally apply to every other node. For simplicity of explanation, the capabilities and structure of node 102 will be discuss herein.

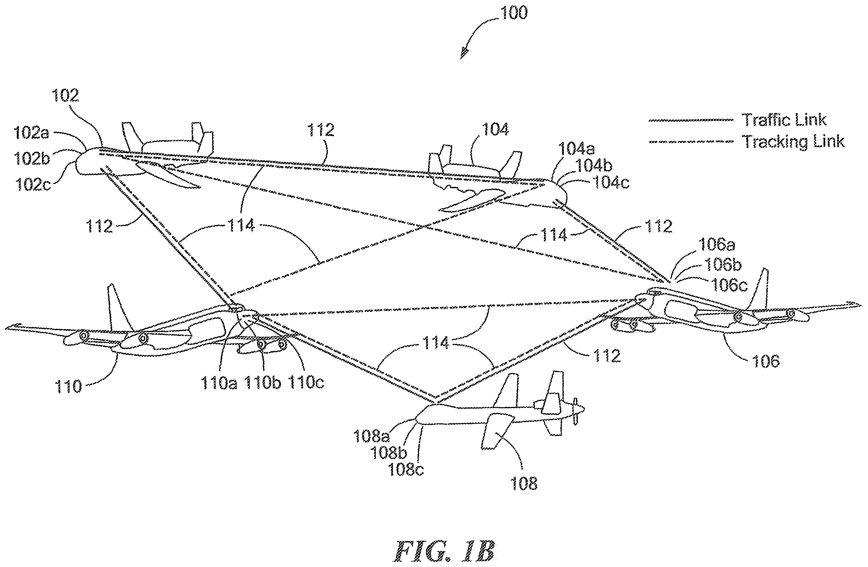

Node 102 includes at least one optical terminal 102a having at least one optical communications aperture 102b. Optical communications terminal 102a may support high-rate data transfer of 1Gbps, 10Gbps, or greater. In some embodiments, optical terminal 102a may also include a plurality of acquisition and tracking (acq/trk) apertures as discussed below in conjuction with FIGS. 1B.

Optical terminal 102a is capable of transmitting and receiving spatially agile FSO beams. Spatial agility means that an FSO beam can be repointed from one direction to another direction rapidly without sweeping the arc between the two directins. In addition to the behavior of a beam being transmitted from an optical aperture, spatial agility also applies to the direction from which an optical aperture can receive an incoming beam. In embodiments optical terminal 102a may use Optical-Phased Arrays (OPAs) to electronically steer their transmit beam and receive directions. As is known in the art, OPAs can electronically repoint a transmit beam in a fraction of the time required by a mechanical steered aperture. Electronic steering allows the nodes 102-110 to rapidly repoint ("hop") their optical communications in order to optically send an receive data in different directions. Of importance here, the hopping time does not depend on the angle between the remote terminal on which the hop is initiated and the remote terminal on which it is terminated as seen from an optical terminal. While this system can operate at any wavelength, a certain embodiment operates at the 1550 nm standard optical communications wavelength. Recent measurements of OPA switching times at other wavelengths can be extrapolated to a beam switching time of ∼0.1ms at 1550 nm. At these switching times, beams can be hopped at such a high rate with so little repointing time that a system with these changing sequential connections closely approximates one with a large number of parallel connections.

In certain embodiments, each active traffic link 112 represents a bidirectional communications link formed by a pair of co-aligned optical beams propagating in opposite direction. In these embodiments, a single communications aperture, such as 102b and 104b, may be capable of both transmitting an optical communications beam and receiving an optical communications beam. Thus, a bidirectional traffic link 112a may be formed between nodes 102 and 104 by pointing the optical aperture 102b in the direction of an optical aperture 104b and by pointing the aperture 104b at the aperture 102b. As such, node 102's transmit beam direction is pointed at node 104's receive direction and node 104's transmit beam is pointed at node 102's receive direction, thus a bidirectional communications link is formed. In embodiments, OPAs, which are capable of accurate steering may be used to co-align optical transmit beams and receive directions.

In other embodiments, each active traffic link 112 represents a unidirectional communications link formed by one transmit beam aligned with one remote receive direction. In these embodiments, each optical terminal, such as 102a and 104a, may have separate apertures for transmitting and recerving data. Thus, for example, terminal 102a may include a transmit aperture aligned to terminal 104a and terminal 104a may include a receive aperture aligned to terminal 102a, while terminal 102a may include a separate receive aperture aligned to terminal 104a and terminal 104a may include a transmit aperture aligned to terminal 102a. Alternatively, the receive aperture of terminal 102a and the transmit aperture of terminal 104a may be aligned to different optical terminals, for example 110a and 106a.

In the exemplary network 100 shown in FIG. 1A, each node 102-110 includes one optical communications terminal, such as 102b, and thus may have at most one active traffic link, such as 112a, at any given time. It will be appreciated that each node may include more than one optical terminal and in general the number of active traffic links is determined by the number of communications terminals provided. Multiple terminals per node enable each node to be simultaneously connected to multiple other nodes. This can provide a complete path through the network at all times and eliminates or reduces the need for data buffering. It also enables optical burst transmission, as discussed further below.

In addition to the active traffic links 112, the network 100 includes a plurality of "inactive" traffic links 140, which represent a mutual intent by two nodes to establish an active traffic link. The techniques by which two nodes may mutually plan to establish a link will be discussed further below. Suffice it to say here, each inactive traffic link 140 may become an active link in the near future, and likewise, each active traffic link 112 may become an inactive link in the near future. For example, inactive traffic link 140a represents a mutual intent by nodes 102 and 106 to establish an active (i.e. actual) traffic link in the near future by repointing their respective transmit beam and receive directions. Likewise, inactive link 140b represents a mutual intent by nodes 102 and 108 to establish a traffic link and inactive link 140c represents a mutual intent by nodes 102 and 110 to establish a traffic link. In certain embodiments, optical terminals 102a, 104a, 106a, 108a, 110a utilize OPAs capable of rapid transmit beam and receive direction repointing on the time scales discussed above. It will now be appreciated that node 102 may be capable of rapidly switching between the active traffic link 112a to node 104 to an active traffic link to any of nodes 106, 108, and 110. Thus, for certain purposes discussed further below, there is no pratical difference between active traffic links 112 and inactive traffic links 140 and the dynamic node degree for each of the nodes 102-110 is the sum of its active and inactive traffic links.

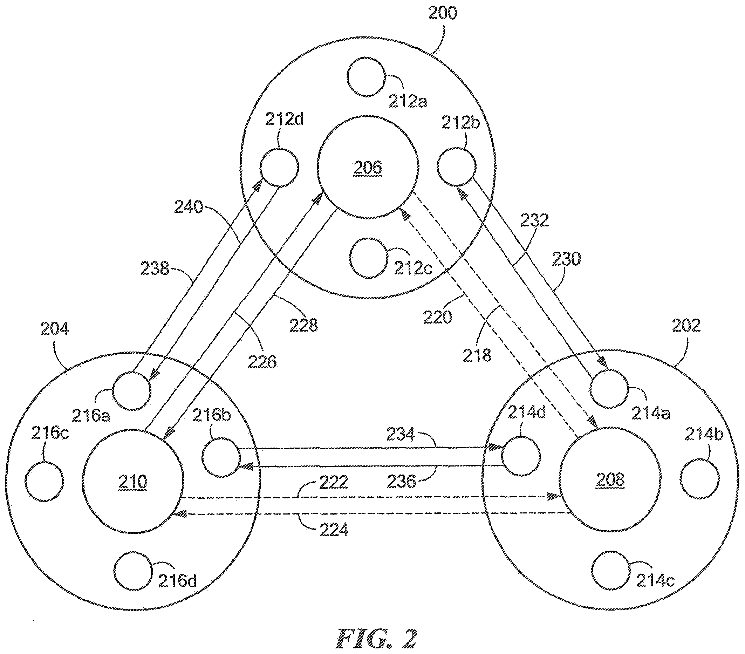

It will be appreciated that the FSO mesh network 100 requires each node 102-110 to be aware of the position of one or more neighboring nodes, or more specifically, the position of one of those node's optical communications aperture, such as 102b. In certain embodiments, the number and relative position of nodes is generally static, and thus each node's position may be preprogrammed into a control system of each other node. In other embodiments, network 100 is a mobile ad-hoc network (MANET), and thus spatial coordination is required wherein each node is capable of dynamically determine the existence and position of neighboring nodes. This process, herein referred to as spatial acquisition, is discussed further below in conjunction with FIG. 2.

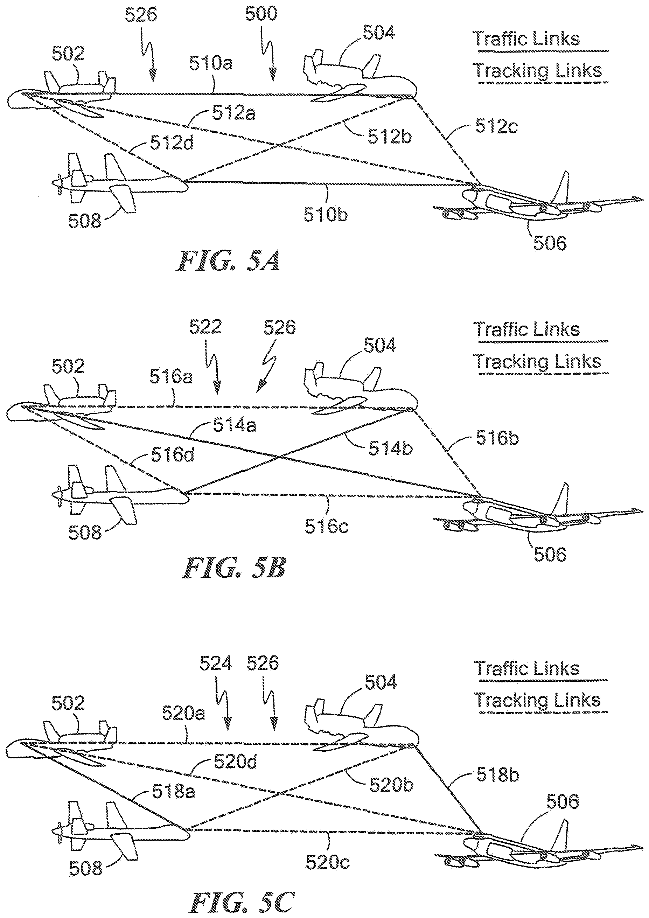

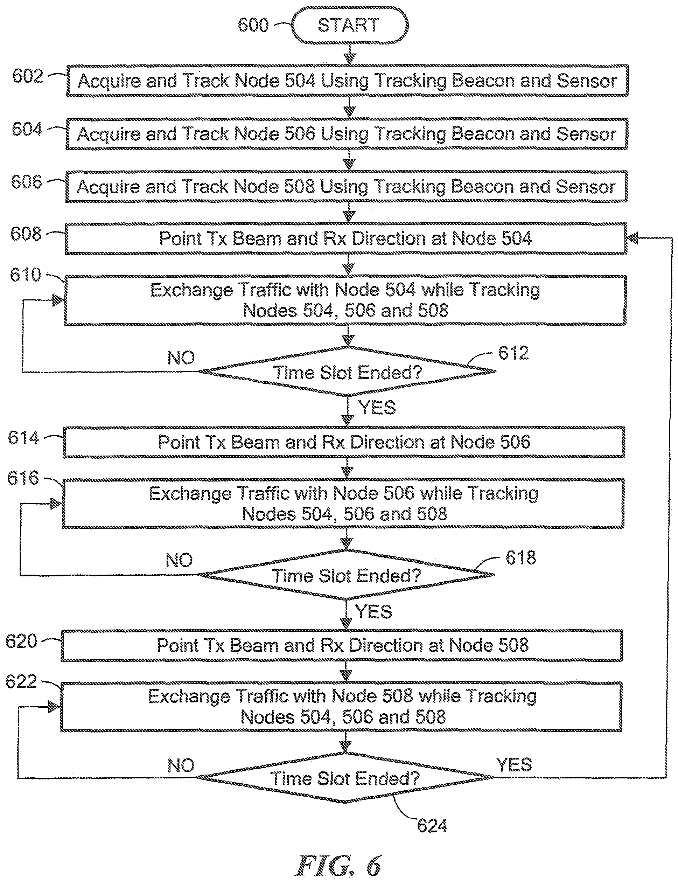

In addition to spatial coordination, temporal coordination among the nodes 102-110 is required to allow synchronization of the pointing directions between communicating nodes. Thus, both spatial coordination and temporal coordination are required. In certain embodiments, Space-Time Division Multiplexing (STDM) is used to provide space-time coordination. Using STDM, each node 102-110 points its transmit beam and receive direction at a specified neighboring node during planned periods of time (referred to as "time slots"). Thus, there is a programmed progression of communications among its neighbors. This progression of communications, including the order of progression, the time at which communications occurs, and the duration of communications (dwell time), is referred to as a communications cycle or hopping sequence. In a typical hopping sequence, each neighboring node is assigned a time slot coincident with the dwell time of the communications beam on that neighbor node during which traffic data is exchanged. An illustrative STDM hopping sequence is shown in FIGS. 5A-5C and 6. STDM as discussed above is used in a peer network nad requires that all nodes be aware of the hopping schedule. A related technique, Space-Time Division Multiple Access (STDMA) can be used in an access network for which multiple client nodes are connected to the network through an aggregation node. STDMA is further described in U.S. Patent No. 8,116,632 (which is hereby incorporated by reference).

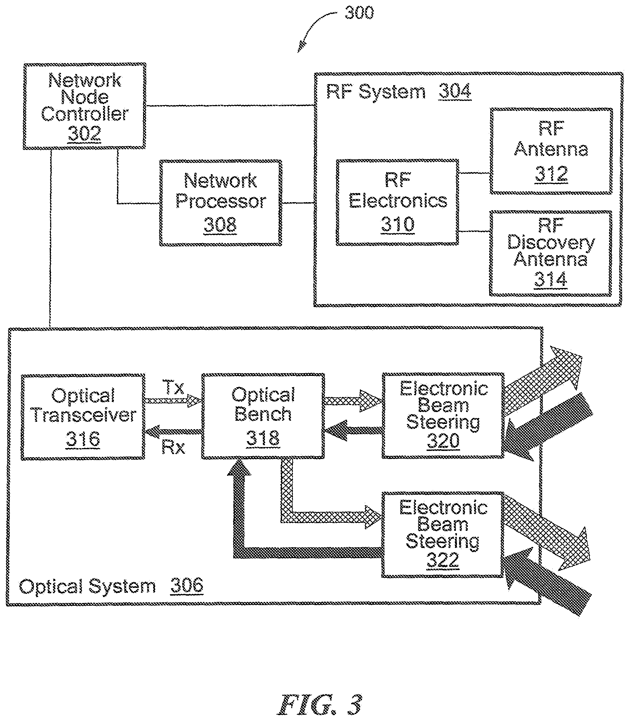

In certain embodiments, a hopping serquence may be preplanned and preprogrammed into each node's network processor (308 in FIG. 3). Preplanned sequences may be used wherein FSO mesh network 100 has a generally static number of nodes and node positions and where link failures are rare.

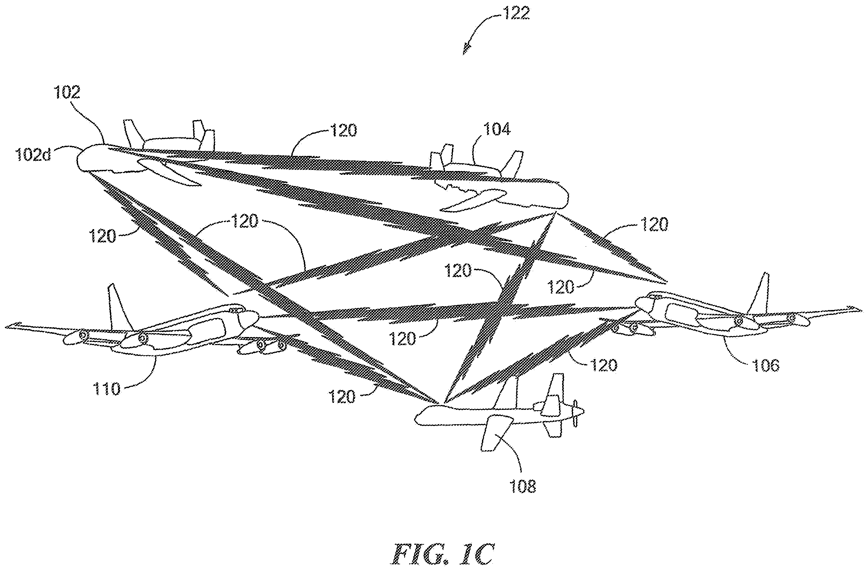

In embodiments, the hopping sequences are adaptive and computed in real-time or near real-time using approaches and techniques similar to those used for some RF MANETs. Adaptive hopping sequences may be used wherein FSO mesh network 100 is a mobile network, a MANET, and/or where link failures are common. Adaptive hopping sequences may be based on traffic requirements, node states, link states, and/or environmental conditions. Traffic loads and node and link states may be communicated via an RF overlay network (122 in FIG. 1C) and each node's network processus 308 may operate to maintain the topology of a network and participates in the distributed calculation of primary and backup routes and stores the resultes. For example, the topology of the traffic links and their dwell times can be altered to accommodate changes in traffic patterns or the charges in locations or number of nodes. If a link or node outage is detected, a node network controller may reroute traffic around the impaiment. If the capacity of the remaining unimpaired links is not adequate to carry all the blocked traffic, lower priority traffic may be discarded or queued for later transmission. The operation of network processor 308 is discussed further below in conjunctions with FIG. 3. Any given hopping sequence may not include active traffic links to every possible node and may include multiple traffic links between certain nodes.

In some embodiments, several or all nodes in network 100 may be synchronized together for arbitrary periods of time to provide long data paths for bursting traffic through the network. Thus, the FSO mesh network 100 provides for burst mode transmission in addition to hopping sequences.

As is known in the art, network performance is commonly measured by its average thoughput/bandwidth, average latency, and jitter. It will be appreciated that achieving a high througput and low latency and jitter is generally desirable, althoug often there is a tradeoff between these messures in a STDM system and the specific applications may demand one more than the other. For example, buffered video streaming generally latency.

One performance cost of STDM is that, because a node's transmit/receive facility has a fixed data rate and is shared among all neighbors, the average bandwidth, ans thus throughput, per effective traffic link goes down as the number of neighbors incresses. This is a common situation in multiple-access networks (e.g. cable internet access and fiber-to-the home) and can be addressed through policy-based quality-of-service (QoS) management with resource scheduling. Wavelength Division Multiplexing (WDM) can also be used to increase the bandwidth of the transmit/receive facility and thereby the bandwidth per effective traffic link with a modest increase in cost and SWaP. Another performance cost is the latency produced by the time a node spends communicating with other neighbors. For a beam control aperture that requires 10 milliseconds or more to repoint a beam between remote terminals, this results in a trade-off between bandwidth efficiency and latency and buffer size. This trade-off can be adjusted dynamically on a per-neighbor basis as part of the QoS policy negotiation. However, the fast switching sub- as millisecond time of recent OPAs largely eliminates this issue, enabling high throughput to be obtained with low latency using short dwell times.

It should be appreciated that the aggregate badwidth of a terminal is shared among the number of neighboring nodes. Some bandwidth inefficiency is inherent in the hopping (space division) operation because it takes a certain amount of time to settle and reform the beam on each remote terminal. This time depends upon the steering mechanism. Mechanically steered beams would be too slow for hops greater than the field-of-view of a telescope, typically ≤ 2°. In one embodiment, electronic beam steering is used because of its speed and open-loop precision. For typical heated optical phased arrays (OPAs) using current generation nematic liquid crystals, the time to redirect a beam between arbitrary angles is approximately 5-10 ms depending upon the type of liquid crystal and the wavelength used. The hopping time does not depend on the angle as seen from an optical terminal between the remote terminal on which the hop is initiated and the remote terminal on which it is terminated. Other types of liquid crystals are much faster than the above-noted steering time and can reduce this beam redirection time by more than an oder of magnitude. Those of ordinary skill in the art will appreciate how to select an appropriate liquid crystal device for a particular application, including the considerations of speed, steering efficiency, and reliability.

Latency is determined by the hopping sequence, specifically, the time it takes for a terminal to revisit the same neighbor's terminal in the process of cycling through all the neighbors. STDM may utilize buffering and burst mode transmission, and thus may not be suitable for traffic that requires very low latency. However, unidirectional streaming traffic (e.g., video) can be handled by means of buffering at each end (i.e., both at the) ingress and egrees nodes) to reduce jitter to an acceptable level.

It should also be appreciated that there is a trade-off between bandwich efficiency and latency due to the deadtime caused by hopping a beam. As the number of neightbors increases, the throughput efficiency can be kept constant by maintaining the ratio between the beam repointing time and dwell time constant and increasing the cycle time, however it is understood that this increases latency. Maintaining a fixed latency requires decreasing the dwell time as users added, but this decreases throughput efficiency. It will be appreciated that the magnitude of this effect depends on the repointing time of the steering aperture and that a new generation of fast OPAs, which have repointing times ≤ 10 ms minimize this effect because they are able to maintain a high throughput efficiency at very short dwell times.

It should now be appreciated that the present disclosure provides a FSO mesh network 100 with a high dynamics node degree, high throughput efficiency and low latency by utilizing high-speed spatially agille FSO beams and space-time coordination among node pointing directions. The network may enable hopping and burst mode transmission while maintaining negligible throughput loss and low latency. The network may use adaptive routing and link switching to adjust to traffic conditions, changes in number and locations of nodes, and to overcome link and node impaiments. Further, the disclosure may incorporate techniques and operations which have been developed for RF mesh networks, such as optimal switching and routing protocols, into FSO network while retaining the advantages of highly directional optical beams with high data rates.

Refering now to FIG. 1B, a FSO mesh network 100 includes nodes 102-110. Node 102, which is representative of all other nodes, includes an optical terminal 102a. The optical terminal 102a includes an optical communications aperture 102b and one or more optical acquisition and tracking (acq/trk) apertures 102c. The acq/trk apertures 102c are capable of transmitting a tracking beacon using source and also receiving a remote tracking beacon using a beacon sensor. In some embodiments, the acq/trk aperatures 102c may utilize OPAs for steering and further, the respective tracking beacons may comprise spatially agile beams. The acq/trk apertures 102c can be less complex than the communications apertures 102b and therefore may have lower cost and size, weight, and power (SWaP) characteristics than the respective communication apertures. Thus, whereas a small aerial or ground vehicle may be capable of supporting at most two optical communications apertures, such a vehicle may be capable of supporting one or more acq/trk apertures in addition to the communications apertures. In a like manner, node 104 includes optical terminal 104a having optical communications aperture 104b and acq/trk aperture 104c, node 106 includes optical terminal 106a having optical communications aperture 106b and acq/trk aperture 106c, node 108 includes optical terminal 108a having optical communications aperture 108b and acq/trk aperture 108c, and node 110 includes optical terminal 110a having optical communications aperture 110b and acq/trk aperture 110c.

In some embodiments, a dedicated acq/trk aperture 102c is provided and can be used by node 102 to continuously track and provide beacons or other signals to othe nodes for the purposes of spatially acquiring or locating other nodes and subsequently maintaining tracking links 114 between those nodes. Optical tracking links are required because the divergence of the traffic link beams is so small that precise pointing information is required in order to obtain adequate signal strength. Acq/trk links can be maintained even when no traffic link 112 has been established between those nodes. Since an optical tracker may require a beacon or other signal to track (which can be at a communication wavelength), the nodes at both ends of a tracking link 114 are mutually aware, meaning both nodes can point their beacons at each other and maintain precise relative position at the same time. Although acq/trk aperture 102c may be separate from the communications aperture 102b, the respective tracking beams and transmit beams may be co-aligned. Co-alignment is feasible because both types of apertures may use OPAs to provide precise, accurate, electronic steering

In other embodiments, the tracking is performed using the communication aperture 102b, and no dedicated acq/trk aperture 102c is needed. In these embodiments, tracking data can be updated by momentarily hopping the transmit beam and receive directions of the communication aperture between the node with which a traffic link 112 is being maintained and those nodes being tracked for potential traffic links 114. This may involve very fast beam repointing in order to maintain high information throughput on the traffic link 112. It may also involve temporal coordination so that the beacon source and the beacon receiver are aimed at each other at the appropriate time. However, this approach may reduce throughput efficiency because the time spent performing the tracking function increases communications deadtime.

As shown, nodes 102-110 are connected by a series of (active) traffic links 112 and tracking links 114. As in FIG. 1A, traffic links 112 in FIG. 1B may represent either bidirectional or unidirectional communications links formed by co-aligned optical transmit beams and receive directions. Tracking links 114 may represent either one tracking beacon and one sensor, or a bidirectional pair of tracking beacons and sensors. Before a traffic link 112 can be established, a tracking link 114 may be established to maintain precise pointing directions between two nodes. Thus, the tracking links 114 represent paths that could potentially be converted into communications links, and thus may correspond to inactive traffic links 140 in FIG. 1A.

One purpose of acq/trk apertures 102c is to facilitate the transmit/receive repointing process and thus further reduce the performance costs associated beam hopping. Acq/trk apertures may track network nodes that are already in the hopping sequence or that are candidates for inclusion. Since the nodes connected by the tracking links 114 are able to maintain their relative position (pointing direction) and the condition of the path between then in real time, the repointing of their communication apertures towards each other and the establishment of an active traffic link between them can occur very quickly. Another purpose of acq/trck apertures 102 is to enable nodes to join the network without interfering with communications by existing network nodes. Yet another purpose of acq/track apertures 102c is that the tracking links maintained by these apertures also provide information on the quality of potential communications links for input to the route computation process.

Referring now to FIG. 1C, the FSO mesh network 100 in FIGS. 1A and 1B is shown with a RF overlay network 122. The RF overlay network 122 includes nodes 102-110 and wireless FR links 120. The RF links 120 may include radio frequency, microwave, or other non-optical electromagnetic communication llinks allowing the nodes 102-110 to communicate with one another using non-optical electromagnetic waves. The RF links 120 could support data transfer at any suitable rate(s). For brevity, all non-optical communication links are referred to as RF links. In particular embodiments, the nodes 102-110 include RF phased array antennas to generate/receive multiple beams or to hop a single beam among multiple nodes. This provides for efficient usage of RF terminal hardware and a larger number of simultaneous RF links. In other embodiments, mechanically-steered RF directional antennas can be used. In still other embodiments, omnidirectional RF antennas can be used. In one embodiment, the RF overlay network 122 employs phased array antennas to either generate and receive multiple beams or hop a single beam among all the nodes. This has the advantage of efficient spectrum use and reduced probability of detection. Alternatively, omnidirectional antennas can be used, although this lacks the above advantages and may lack the capacity to support the control plane traffic. The RF overlay network 122 may be implemented especially to support the FSO network or may be an existing network whose primary purpose is to carry RF communication traffic.

The RF links 120 constitute a parallel or overlay network utilizing the same nodes 102-110. The overlay network can be used to transport information at lower data rates relative to the optical communications network (such as control plane data), to transport certain data when optical communications links fails, or to transport data intended only to be carried on the RF network. RF may be used because of its higher availability in the atmosphere and the requirement that control information be delivered with higher assurance than user traffic. While the RF network provides logical connectivity between all nodes in the vicinity of the optical network, it deas not need to be physically fully connected if it has sufficient capacity to relay information from distant nodes.

As discussed aboves, the RF overlay network 122 can be used to transmit control plane information between nodes. The control plane information can include a wide variety of information depending on the implementation. For example, the control plane information can include information for spatially and temporally coordinating transient reciprocal beam pointing between nodes, information that allows the nodes to repoint their optical systems at one another, and beacon signals or other signals. This information can be used to plan routes through the network for the traffic links. Because the optical state of potential links, node locations, and traffic patterns may change continuously, route calculations can be performed continuously. The RF overlay network 122 can also be used to transport a limited amount of priority traffic if optical traffic links (112 in FIG. 1B) are not available. The RF overlay network 122 can further be used to transport performance information about links 112 being monitored and to provide status information about nodes without tracking links 114 so that tracking links 114 can be rapidly established if needed.

In certain embodiments, the RF overlay network 112 comprises a MANET capable of discovering nodes and potential links. Therefore, it will be appreciated that RF overlay network 122 can provide the FSO mesh network 100 with a self-organizing capability based on RF discovery of nodes and traffic-based optical connectivity.

Referring now to FIG. 2, optical terminals 200, 202, and 204, each of which may be the same as or similar to any of optical terminals 102a, 104a, 106a, 108a, and 110a in FIG. 1A, are shown. For simplicity of explanation, three nodes/terminals are shown in FIG. 2, however it will be appreciated that the systems and methods described herein allow for networks with a generally arbitrary number of nodes. Each of terminals 200, 202, 204 includes a respective one of optical communications apertures 206, 208, 210, which transmit and/or receive communications beams 218-228. Pairs of communications beams 218, 220 and 222, 224, shown as dashed lines, form inactive traffic links and may correspond to any of links 114a-114d in FIG. 1A. Likewise, the pair of communication beams 226, 228 form an active trafffic link that may correspond to any links 112a-112d in FIG. 1A. For simplicity of explanation, pairs of counter-propagating communications beams may herein be interchangeably referred to as traffic links ; although in some embodiments a traffic link may be unidirectional and consist of a single beam. Each terminal 200-204 further includes a respective plurality of acq/trk apertures 212a-212d, 214a-214d, and 216-216d that provide tracking beams (beacons) 230, 232, 234, 236, 238, and 240. Pairs of tracking beacons 230, 232, and 234, 236, and also 238, 240 form respective tracking links. For simplicity of explanation, pairs of tracking beacons may herein be interchangeably referred to as tracking links.

Still referring to FIG. 2, the operation and function of optical terminal 200 will now be described. It will be appreciated that, because optical terminals 200-204 have similar structures, this descripton also generally applies to terminals 202 and 204. Optical terminal 200 uses precise electronic beam steering of transmit communication beams 218, 228 and receive directions 220, 226 to provide bidirectional network connectivity to neighboring node optical terminals 208 and 210 by way of STDM. Using a single optical communications aperture to connect a plurality of remote nodes lowers the cost and SWaP characteristics of using optical terminal 200 compared to the use of multiple optical terminals, each with a single beam, to provide the same number of beams.

As will become apparent from the description hereinbelow, space division multiplexing is provided by using high-speed, argile, precise electronic beam steering to hop communications beam 218, 228 and receive direction 220, 226 among remote terminals 202 and 204. Time division multiplexing is provided by assigning each remote terminal 202 and 210 a time slot coincident with the dwell time of the transmit beam 218, 228 and receive direction 220, 226 on that remote terminal. Thus, a combination of space and time division multiplexing (i.e. STDM) enable optical terminal 200 to operate such that bidirectional communications are possible with the appropriate one of the plurality of remote terminals 202, 204 as a result of transmit beam 218, 228 and receive direction 220, 226 being pointing at that remote terminal at the correct time.

Accordingly, at any given instant in time, terminal 200 (e.g., via a beam steering mechanism) directs a transmit beam and a receive direction at one of the remote terminals 202, 204 and is able to transmit to and receive from that remote terminal. The time that terminal 200 dwells on a specific one of the remote terminals 202, 204 coincides with the time slot allocated to that terminal and may be specified by a beam hopping sequence. The terminal 200 can support a variable number of neighbors, up to the maximum that is determined by several factors, including the number of communications apertures, the number of acq/trk apertures, the aggregate bandwitdth capacity of the terminal 200, and the service requirements of the network. As mentioned above, in certain embodiments, there is one acq/trk aperture for each neighboring node and one communications aperture shared among the neighboring nodes. In other embodiments, the number of acq/trk apertures may be fewer or greater than the number of neighbors. It will be appreciated that, by using STDM, the largest and most expensive components of terminal 200 can be shared among all its neighbors.

In the exemplary network show in FIG. 2, a single optical communications terminal 200 communicates with neighboring terminals 200, 204 through transmit beam 218, 228 and receive direction 220, 226 controlled using the single communications aperture 206. The optical terminal 200 steers transmit beam 218, 228 and receive direction 220, 226 to each of the neighboring terminals 202, 204 at a desired time and for a desired time period. Transmit beam 228 and receive direction 226 represent the state of the illustrative FSO network at the current insant in time, where trasmit beam 218 and receive direction 220 represent the state of the FSO network at an ealier or later instant in time. Thus, as shown, an actual traffic link is currently established between terminals 200 and 204, whereas an inactive traffic link is established between nodes 200 and 202.

To enable fast hopping without spatial re-acquisition, neighboring node terminal 202 provides a tracking beacon 232 to acq/trk aperture 212b and, likewise, neighboring node terminal 204 provides a tracking beacon 238 to acq/trk aperture 212d. In embodiments wherein the number of acq/trk apertures is the same as or greater than the number of neighbors, remote terminals 202, 204 provide a respective one of tracking beacons 232, 238 to a corresponding one of the tracking apertures 212a-212d. Thus, each tracking apertures 212a-212d continuously receives a respective one of the plurality of tracking beacons 232, 238. This enables each terminal to track neighboring terminals with the same precision whether or not an active traffic link exists between them. Further, the transmit beam and receive direction of a pair of terminals can be immediately (i.e. with no delay for re-acquisition) pointed to the appropriate one of the plurality of remote terminal 202, 204 a traffic link is required between them. The beacons 232, 238 can also be modulated to transmit low-bandwidth control and order wire information between the remote trminals 202, 204 and terminal 200. Such control and order wire information may be exchanged through low-bit-rate encoding of the tracking beacons.

As shown, the terminal 200 includes four acq/trk apertures 212a, 212b, 212c, and 212d for tracking two neighboring node terminals 202, 204. It is desirable to have at least one dedicated acq/trk aperture for each neighbor in order to maximize bandwidth efficiency by avoiding the need for re-acquisition, and for the timely communication of control information that enables dynamic bandwidth allocation. It should be noted, however, that continuous control and tracking may not be required in every application. Thus, in some embodiments, the number of acq/trk apertures may less than the number of neighboring nodes.

In one embodiment in which the number of acq/trk apertures is less than the number of remote terminals, the acq/trk apertures 212 are cycled such that each remote terminal does not necessarily have an acq/trk tracking aperture associated with it at all times. In this case, the terminal 200 manages the acq/trk apertures as a resource pool and assigns an acq/trk aperture to each remote terminal well before the time the terminal 200 points the communications transmit beam 218, 228 and receive direction 220, 226 at the remote terminal. In this way the spatial re-acquisition process is completed before the assigned communications time slot for the remote terminal is reached in the hopping sequence. Thus, each remote terminal may receive a different tracking beacon during different time slots in a hopping sequence. Because the remote terminal will have no beacon to track at certain times during the hopping cycle, it must also re-acquire the terminal 200 node when a new tracking beacon is assigned to it. It should be appreciated that the re-acquisition time depends upon the regularity of the relative motion of the nodes as well as the duration of the time interval during which no beacon and/on acq/trk aperture is available. However, accurate target trajectory prediction algorithms exist to reduce the re-acquisition time. Just as all terminals must be aware of the hopping sequence for the traffic links, there must be a re-acquisition sequence shared by all terminals when this "just in time" re-acquisition technique is employed.

Referring now to FIG. 3, an illustrative network node with both FSO and RF capabilities is shown. In particular, FIG. 3 illustrates a hybrid "optical plus RF" optical terminal 300 that may be located at any node 102-110 of FSO mesh network 100 in FIG. 1A. In the embodiment shown, the terminal 300 includes a network node controller 320. an RF system or terminal 304, one or more optical systems or terminals 306, and a network processor 308. In other embodiments, a nod may have an optical-only terminal.

The controller 302 controls the overall operation of the hybrid terminal. For example, the controller 302 may manage the operation of the RF terminal 304 and the optical terminal 306 to control the transmission or reception of data by the terminal 300. The controller 302 is responsible for functions such as startup and shutdown of terminals, monitoring and reporting of terminal and link status, configuring the terminals, redirecting traffic and acq/trk links, and executins the primary and backup routing plans calculated and stored in the network processor 308 when instructed by the network processor 308. The controller 302 includes any suitable structure for controlling a communication terminal, such as a processing system that includes at least one microprocessor, microcontroller, digital signal processor, field programmable gate array, or application-specific integrated circuit (ASIC).

The network processor 308 operates to maintain the topology of a network and the states of the nodes and links. The network processor 308 also participates in the distributed calculation of routes and hopping sequences based on traffic loads and link states, and stores the results. The calculation of routes could represent a distributed process performed amongst multiple nodes 300 using collaboration and information exchange amongst the nodes. The network processor 308 further decides on the mitigation procedure to be implemented in case of an outage, which may be local or remote. The processor 308 includes any suitable structure for supporting network organization, such as a processing system that includes at least one microprocessor, microcontroller, digital signal processor, field programmable gate array, or ASIC.

The RF terminal 304 may provide communication with other nodes using RF communication. The RF terminal 304 may be specifically designed to support the operation of an FSO mesh networks, or it may also be part of an RF communication network that is used to incidentally provide support to the FSO mesh network. In this example, the RF terminal 304 includes RF. electronics 310, an RF antenna 312, and a discovery antenna 314. The RF electronics 310 perform various functions for generating signals for wireless transmission or for processing signals received wirelessly. For example, the RF electronics 310 could include filtres, amplifiers, mixers, moderns, or other comportents used to generate and receive RF signals. Other functions could also be supported, such as signal combining to combat multipath fading or to support the use of phased array antennas. The RF electronics 310 could further include MANET and Common Data Link (CDL) functionality, which supports the exchange of data with multiple other nodes. The RF electronics 310 include any suitable structure facilitating communication with other nodes using RF or other wireless non-optical electromagnetic signals

The RF antenna 312 and the discovery antena 314 support the transmission and receipt of RF signals to and from other nodes. In some embodiments, the RF antenna 312 is used to communicate with other nodes and exchange data, such as control plane information, and the discovery antenna 314 is used to locate and identify new nodes that come into RF range of the antenna 314 for the purpose of establishing RF communications. The RF antenna 312 includes any suitable structure for communicating data to and from other nodes, such as a phased array antenna. The discovery antenna 314 includes any suitable structure for receiving signals from new nodes, suche as an omnidirectional radiator structure. Note that the use of antennas such as phased array plurality or RF beams in different directions.

As shown, the optical system 306 includes an optical transceiver 316, an optical bench 318, an electronic communications beam steering assemblym 320, and an electronic tracking and beacon steering assembly 322. The optical transceiver 316 generally operates to convert electrical data into optical signals for transmission and to convert received optical signals into electrical data for processing. The optical transceiver 316 includes any suitable structure for converting electrical data to and from optical signals optical modem. Note that while an integrated optical transceiver is shown here, the optical transceiver 316 could be implemented using an optical transmitter and a separate optical receiver.

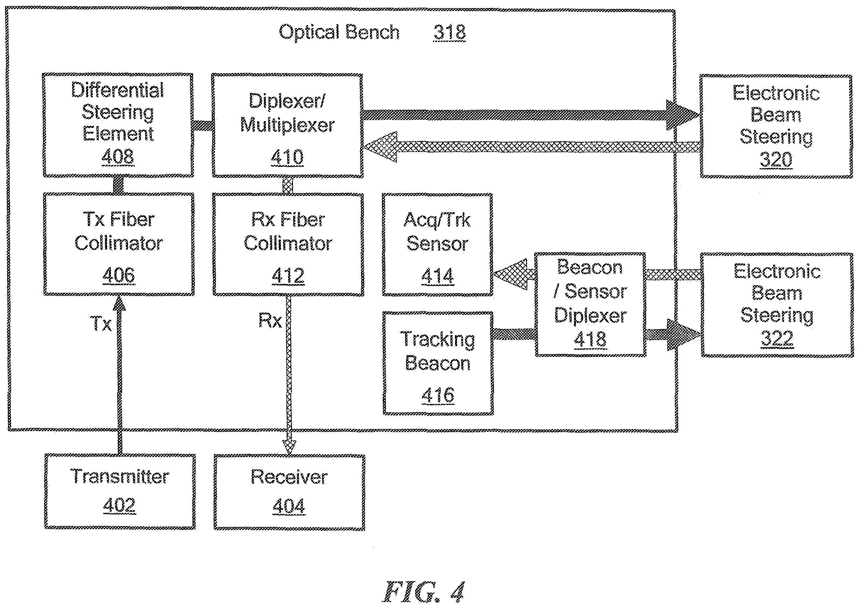

The optical bench 318 performs various functions to process the optical beams sent to and from the optical transceiver 316. For example, the optical bench 318 could include components for collimating light and directing the light towards both the communications beam steering assembly 320 and the racking beam steering assembly 322. The optical bench 318 includes any suitable structure for altering optical beams sent to and from an optical transceiver. The optical bench 318 also performs functions needed for acquisition and tracking. An example embodiment of the optical bench 318 is shown in FIG. 4, which is described, below.

The electronic communication beam steering assembly 320 is configured to steer an outgoing communication transmit beam and an incoming receive direction. The electronic beam steering assembly 320 can therefore change the transmit beam direction and the receive direction. The transmit beam direction represents the direction in which an outgoing beam is transmitted away from the terminal 300. The receive direction represents the direction from which an incoming beam is received at the terminal 300. Similarly, the acq/trk beam steering assembly 322 aims the tracking beacon toward a remote terminal and points the receive direction to collect light from the beacon sent by that terminal. The electronic beam steering assemblies 320 and 322 include any suitable structure for directing and redirecting incoming and outgoing optical beams, such as one or more optical phased arrays and one or more diffractions gratings. Possible designs for the electronic beam steering assembly are provided in U.S. Patent No. 7,215,472; U.S. Patent No. 7,428,100 ; and U.S. Patent Publication No. 2012/0081621 (which are hereby incorporated by reference). Any other beam steering apparatus that provides rapid, agile, and precise beam repointing can be used.

Referring to FIG. 4, an illustrative FSO optical bench 318 for use in optical terminal 300 of FIG. 3 is shown. The optical bench 318 is optically coupled to one or more optical transmitters 402 and one or more optical receivers 404 in the optical transceiver 316 of FIG 3. Multiple optical transmitters and receivers can be employed if wavelenght division multiplexing (WDM) is used to increase the data rate on a given traffic link. Each optical transmitter 402 generally operates to generate optical signals for outgoing communication, and each optical receiver 404 generally operates to convert incoming optical signals into another form (such as electrical signals) for further processing. Additional components could be used in the optical transceiver 316, such as a high-power optical amplifier between an optical transmitter 402 and the optical bench 318 or an Optical Automatic Gain Control (OAGC) amplifier or low-noise optical amplifier between an optical receiver 404 and the optical bench 318.

FIG. 4 is an example of an optical bench 318 adapted to provide optical communications over a traffic link that occurs through a communication aperture, while the optical tracking links are operated through separate acq/trk apertures as described above. In this embodiments, an electronic beam steering assembly 320 is used only for the optical traffic links, and an electronic beam steering assembly 322 is used only for the tracking links. The electronic beam steering assemblies 320, 322 may be of the same or different designs depending on, for example, cost and SWaP characteristics for a particular application.

The optical bench 318 includes one or more transmit fiber collimators 406. The collimator 406 converts light from the optical transmitter 402 propagating in an optical fiber to a collimated beam of light in free space. In some embodiments, one or more differential steering elements 408 direct the outgoing collimated beams in the appropriate direction(s) to an optical diplexer/multiplexer 410. The purpose of the differential steering elements 408 is to compensate for offset in the pointing angles for transmission and reception. In other embodiments, the same function can be performed by placing the differential steering elements 408 in the receiver path. The differential steering elements 408 may include any type of precision steering components, such as fine steering mirrors or OPAs. The diplexer/multiplexer 410 separates the transmit and receive beams and, if WDM is used, separates (for receive) and combines (for transmit) the different wavelength channels. The diplexer/multiplexer 410 directs the outgoing beams to the electronic beam steering assemblies 320, 322.

One or more incoming beams are received at the optical diplexer/multiplexer 410 from the electronic steering assembly 320. The diplexer/multiplexer 410 directs the incoming beams to one or more receive fiber collimators 412. The collimators 412 focus the light in the incoming beams into optical fibers, which conduct the beams to the optical receiver 404.

Each collimator 406, 412 includes any suitable structure for collimating light. The differential steering elements 408 include any suitable structure for directing light in a desired direction. The diplexer/multiplexer 410 includes any suitable structure for providing different optical paths for different beams of light based on such properties as, for example, polarization? wavelength, and propagation direction. In this example, transmit beams are directed from the steering element 408 to the steering assembly 320, while receive beams are directed from the steering assembly 320 to the collimators 412. In embodiments, the diplexer/multiplexer 410 includes a WDM multiplexer/demultiplexer.

As shown in FIG. 4, the optical bench 318 may also include an acq/trk ssensor 414, a beacon source 416, and a bearn/sensor diplexer 418. Tracking beacons can be directed to other nodes using the electronic beam steering assembly 322. The acq/trk sensor 414 is used to optically locate and establish a link with neighboring node based on a tracking beacon being received from that node. This typically proceeds through a mutual process (i.e. spatial acquisition) that transitions from approximate determination of direction through precise closed-loop tracking. Once tracking is established, it is maintained as a tracking link. Optionally, a tracking link can be established and maintained using the steering assembly 320. The spatial acquisition and tracking functions can be performed by the same sensor 414 or by separate sensors 414. Examples of such sensors 414 include quadrant detectors, focal plane arrays, or other optical position or angle sensors.

The beacon source 416 generates an optical beam to provide a beacon directed toward a distant node to enable the distant node to acquire and track the local node. The beacon source 416 may include any suitable optical beam source, such as a laser, and it may generate a modulated signal to provide low-data-rate information over a link to the distant node. An example of such information could include the status of the local node and its capability to carry additional traffic. The beacon/sensor diplexer 418 may be used to separate/combine the outgoing beacon from/with the incoming beacon in a manner similar to that of the optical diplexer/multiplexer 410. In other embodiments, the 416 each have their own electronic beam steering assembly 322.

Referring to FIGS. 5A-5C, reconfiguration of traffic and tracking links in an illustrative FSO mesh network 526 having nodes 5002, 504, 506, and 508 is shown. Each node 502-508 includes an optical terminal, such as terminal 400 of FIG. 3, capable of transmitting and receiving an optical communications beam suitable for high-rate data transfer. In addition, each optical terminal may be capable of acquiring and tracking at least two neighboring nodes, as shown. In FIG. 5A, a first topology 500 is formed by a traffic link 510 a between nodes 502 and 504 and a traffic link 510b between nodes 506 and 508. In FIG. 5B, a second topology 522 is formed by a traffic link 514a between nodes 502 and 506 and a traffic link 514b between nodes 504 and 508. In FIG. 5C, a third topology 524 is formed by a traffic link 518a between nodes 502 and 508 and a traffic link 518b between nodes 504 and 506. It will be appreciated that the network topologies 500, 522, and 524 are defined by the respectively configuration of traffic links, as shown.

FIGS. 5A-5C may be collectively represent a coordinate hopping sequence among nodes 502-508. The coordinated hopping sequence has three steps, as shown in FIGS. 5A, 5B, and 5C respectively. At each step, the links are maintained for some planned period of time, referred to as a time slot or the dwell time. Each time slot may short, for example several milliseconds, to increase the node degree from its static value of 1 to a dynamic value of 3. Alternatively, each time slot may be long, for example several seconds, to allow burst mode transmission through the network. The dwell times associated with FIGS. 5A-5C could be of equal or different durations. Where latency is an important consideration, short time slots are preferred.

FIG. 6 is a flowchart corresponding to the spatial acquisition (i.e., network organization) and hopping sequence processes shown in FIGS. 5A-4C, from the perspective of node 502. Each node of the example network of FIGS. 5A-5C will execute similar procedure relative to its own perspective and, therefore, the node numbers shown in FIG. 6 are relative to representative node 502. Moreover, the relative acquisition/hopping sequence shown in FIG. 6 must be coordinated in time and space with a similar sequence performed by or more other nodes in the network. It should be appreciated that the sequence shown in FIG. 6 can be implemented in hardware, such as the electronic beam steering assembly 320 (FIG. 3) and/or computer systems, such as a network node controller 302 (FIG. 3). Rectangular elements (typified by element 602), herein denoted "activity blocks," represent combinations of hardware activities and computer software instructions or groups of instructions. Diamond shaped elements (typified by element 610), herein denoted "decision blocks," represent computer software instructions, or groups of instructions, which affect the execution of the computer software instructions represented by the processing blocks.

Alternatively, the computer-system-related operations of the activity and decision blocks reprensent steps performed by functionally equivalent circuits such as a digital signal processor circuit, ASICs, or FPGAs. The flow diagram does not depict the syntax of any particular programming language. Rather, the flow diagram illustrates the functional information one of ordinary skill in the art requires to fabricate circuits or to generate computer software to perform the operations required of the particular apparatus for its intended purpose. It should be noted that many routine program elements, such as initialization of loops and variables and the use of temporary variables are not shown. It will be appreciated by those of ordinary skill in the art that unless otherwise indicated herein, the particular sequence of blocks described is illustrative only and can be varied without departing from the disclosure. Thus, unless otherwise stated the blocks described below are unordered meaning that, when possible, the steps can be performed in any convenient or desirable order, for example, communicating with the other nodes in a different order than indicated or changing order in real time. From FIG. 6, it should be obvious to one of ordinary skill in the art which additional steps are needed to reconfigure the network by adding or subtracting nodes, with the resultant modification to the hopping sequence.

Prior to 600 the particular nodes constituting the network are discovered by RF or some other mechanism are known to each other. In addition, the hopping order and timing have been established and are known to all participating nodes. At step 600 the connection of the network nodes is initiated. From the perspective of node 502, this requires spatial acquisition followed by precision tracking of node 504 (step 602), node 506 (step 604), and node 508 (step 606). Note that steps 602-606 can be performed in any order or in parallel. Once these activities are complete, node 502 points its transmit (Tx) beam and receive (Rx) direction at node 504 (step 608), the first node with which it is to communicate in the example illustrated in FIG. 6. Once this is done, node 502 begins exchanging traffic with node 504 while simultaneously maintaining precision tracking of nodes 504, 506, and 508 (step 610). As indicated by decision block 612, this continues until the preset time slot for communication has ended, after which node 502 repoints its Tx beam and Rx direction at node 506 (step 614). Then node 502 will exchange traffic with node 506 while maintaining precisions tracking of nodes 504, 506, and 508 (step 616). When the time slot for exchanging traffic has ended (step 618), node 502 repoints its Tx beam and Rx direction at node 508 (step 620). Node 502 then exchanges traffic with nodes 508 while simultaneously tracking nodes 504, 506, and 508 (step 622). When the third time slot is completed (step 624), node 502 restarts the sequence by repointing its Tx beam and Rx direction, to node 504 (step 608).

In certain embodiments, the hopping sequence may be repeated as shown in FIG. 6. In other embodiments, the hopping sequence may be adaptive and change in response to network conditions, traffic demands, or other factors, as discussed further above. It should be appreciated that each of the other nodes in the network execute a complementary sequence of steps. For example, when nonde 502 points its Tx beam and Rx direction at node 504 (step 608), node 504 will simultaneously point its Tx beam and Rx direction at node 502. It should also be noted that the steps of FIG. 6 (or permutations of them) are executed while the network of FIGS 5A-5C is needed to transport traffic. When the network is no longer needed it can be dissolved by having the nodes disconnect from each other by terminating all optical links. Similarly, if changes in traffic patterns or locations of nodes require modification of the network, nodes can be added or subtracted from the network and a new hopping sequence implemented.

It should now be appreciated a network according to the disclosure includes three or more nodes, each node having a plurality of optical data terminals to provide optical beam hopping capability to connect to at least two remote nodes using an optical link; at least two of the nodes connected in a first network topology during a first period of time, and at least two of the nodes connected in a second network topology during a second period of time; wherein a first data path is established among the connected nodes during the first period of time and a second data path is established among the connected nodes during a second period of time. One or more of the following features may comprise independently or in combination with another feature including wherein each node is assigned a time slot to transmit data during the first period of time and each node is assigned a time slot to transmit data during the second period of time; wherein each node is assigned a time slot to receive data during the first period of time and each node is assigned a time slot to receiving data during the second period of time; wherein the time between the end of the first time period and the start of the second time period is 15 milliseconds or less; wherein: each node is assigned a time slot to transmit data during the first period of time; each node is assigned a time slot to receive data during the first period of time, and the time slots to transmit data coincide with the time slots to receive data; wherein the duration of the time slots can different for each network topology; wherein the duration of either of the first or second periods of time is based upon a factor selected from the group consisting of real-time traffic deman; environment conditions; the statys of at least one node; and the status of at least one optical link; wherein of either the first or second network topology is based upon a factor selected from the group consisting of : real-time traffic demand; environment conditions; the status of at least one node; and the status of at least one optical link; wherein the optical data terminal includes an optical phased array; wherein each node further includes a tracking assembly to spatially track a plurality of remote nodes and each note transmits tracking beacons to be tracked by a plurality of remote nodes; wherein the tracking assembly includes an optical phased array; wherein the tracking assembly has an attribute selected from the group consisting of: smaller size compared to the optical data terminal; a lower weight compared to the optical data terminal; a lower power requirement compared to the optical data terminal; and a lower cost compared to the optical data terminal; wherein each node further includes an acquisition assembly providing capability to acquire the spatial position of a plurality of remote nodes; where the acquisition assembly includes an RF antenna; wherein the acquisition assembly includes an optical phased array; wherein the acquisition assembly further provides capability to spatially track a plurality of remote nodes

It should now be appreciated a method for transmitting data in a free-space optical network according to the disclosure includes pointing an optical data beam from a first node to a second node during a first time period; trasmitting data from the first node to the second node during the first time period; pointing the optical data beam from the first node to a third node during a second time period, and trasmintting data from the first node to the third node during the second time period, wherein the third node is capable of transmitting data to a fourth node during the first time period and the second node is capable of transmitting data to a fourth node during th second time period. One or or more of the following features may comprise independently or in combination with another feature including wherein the second node transmits data to the first node during the first time period; wherein the time between the end of the first time periord and the start of the second time period is 15 milliseconds or less; wherein electronic steering is used to point the optical data beam ; wherein: tracking beacons are pointed from the first node to the second node and the third node during the first and second time periods; tracking beacons are pointed from the second node to the first node and the third node during the first and second time periods; and tracking beacons are pointed from the third node to the first node and the second node during the first and second time periods; wherein: the first node tracks the second node and the third node during all time periods; the second node tracks the first node and the third node during all time periods; and the third node tracks the first node and the second node during all time periods; wherein: a tracking beacon originating on the first node while the first node is communicating with the second node during the first time period is redirected from the second node to the third node before the end of the first time period to enable the third node to begin tracking the first node before the start of the second time period; a tracking receiver on the third node is redirected before the end of the first time period to receive the tracking beacon from the first node.

Having described certain embodiments, which serve to illustrate various concepts, structures and techniques, which are the subject of this patent, it will now become apparent to those of ordinary skill in the art that other embodiments incorporating these concepts, structures and techniques may be used. Accordingly, it is submitted that that scope of the patent should not be limited to the described embodiments but rather should be limited only by the scope of the following claims.

## Claims

1. A free-space optical mesh network comprising:
three or more nodes, each node (102) having:
an optical communication aperture (206) and at least one tracking aperture (212a-212d) to provide optical beam hopping capability,
a network processor (308),
an RF terminal (304), and
a network node controller (302),
wherein each node is configured to connect to at least two remote nodes (104/106) using an optical link;
a network topology defining a configuration of traffic links between the three or more nodes, in which at least two of the nodes are configured to be connected such that a data path is established among the connected nodes;
wherein the network is configured to communicate states of the nodes and states of the traffic links between the three or more nodes over an RF network formed between each of the RF terminals;
wherein each network processor (308) is configured to participate in a distributed calculation of primary and back-up routes for the topology and to store the results of the distributed calculation; and
wherein, if a traffic link impairment or a node impairment is detected via the RF network at one of the nodes, the network processor of said node is configured to instruct the node controller of said node to switch the configuration of traffic links of the topology from the primary route to one of the back-up routes, and
wherein the node controller is configured to adjust the configuration of the traffic links between the three or more nodes in the network topology to reroute traffic data around the impairment.

2. The network of claim 1 wherein the configuration of traffic links between the three or more nodes in the network topology is based upon a factor selected from the group consisting of:
real-time traffic demand;
environment conditions;
the status of at least one node; and
the status of at least one optical link.

3. The network of claim 1, wherein each node further comprises an optical phased array to electronically steer transmit beam and receive directions.

4. The network of claim 1 wherein each node is configured to spatially track a plurality of remote nodes and each node is configured to transmit tracking beacons to be tracked by a plurality of remote nodes.

5. The network of claim 1 wherein each node further includes an acquisition assembly providing capability to acquire the spatial position of a plurality of remote nodes.

6. The network of claim 5 where the acquisition assembly includes an RF antenna or an optical phased array.

## Patentansprüche

1. Optisches Freiraummaschennetzwerk, das Folgendes umfasst:
drei oder mehr Knoten, wobei jeder Knoten (102) Folgendes aufweist:
eine optische Kommunikationsöffnung (206) und mindestens eine Verfolgungsöffnung (212a-212d), um eine optische Strahlsprungfähigkeit bereitzustellen,
einen Netzwerkprozessor (308),
ein RF-Endgerät (304) und
eine Netzwerkknotensteuerung (302),
wobei jeder Knoten dazu ausgelegt ist, sich unter Verwendung einer optischen Verbindung mit mindestens zwei entfernten Knoten (104/106) zu verbinden;
eine Netzwerktopologie, die eine Auslegung von Verkehrsverbindungen zwischen den drei oder mehr Knoten definiert, bei der mindestens zwei der Knoten dazu ausgelegt sind, derart verbunden zu werden, dass ein Datenpfad unter den verbundenen Knoten hergestellt wird;
wobei das Netzwerk dazu ausgelegt ist, Zustände der Knoten und Zustände der Verkehrsverbindungen zwischen den drei oder mehr Knoten über ein RF-Netzwerk, das zwischen jedem der RF-Endgeräte gebildet ist, zu kommunizieren;
wobei jeder Netzwerkprozessor (308) dazu ausgelegt ist, an einer verteilten Berechnung der primären und der Hilfsrouten für die Topologie teilzunehmen und die Ergebnisse der verteilten Berechnung zu speichern; und
wobei, wenn via das RF-Netzwerk an einem der Knoten eine Verkehrsverbindungsbeeinträchtigung oder eine Knotenbeeinträchtigung detektiert wird, der Netzwerkprozessor des Knotens dazu ausgelegt ist, die Knotensteuerung des Knotens anzuweisen, die Auslegung der Verkehrsverbindungen der Topologie von der primären Route auf eine der Hilfsrouten umzuschalten, und
wobei die Knotensteuerung dazu ausgelegt ist, die Auslegung der Verkehrsverbindungen zwischen den drei oder mehr Knoten in der Netzwerktopologie anzupassen, um die Verkehrsdaten um die Beeinträchtigung umzuleiten.

2. Netzwerk nach Anspruch 1, wobei die Auslegung der Verkehrsverbindungen zwischen den drei oder mehr Knoten in der Netzwerktopologie auf einem Faktor basiert, der aus der Gruppe ausgewählt ist, die aus Folgendem besteht:
Echtzeitverkehrsbedarf;
Umgebungsbedingungen;
dem Status von mindestens einem Knoten und
dem Status von mindestens einer optischen Verbindung.

3. Netzwerk nach Anspruch 1, wobei jeder Knoten ferner ein phasengesteuertes Array umfasst, um Sendestrahl- und Empfangsrichtungen elektronisch zu lenken.

4. Netzwerk nach Anspruch 1, wobei jeder Knoten dazu ausgelegt ist, eine Vielzahl von entfernten Knoten räumlich zu verfolgen, und jeder Knoten dazu ausgelegt ist, Verfolgungsbaken, die von einer Vielzahl von entfernten Knoten zu verfolgen sind, zu übertragen.

5. Netzwerk nach Anspruch 1, wobei jeder Knoten ferner eine Erfassungsanordnung beinhaltet, die eine Fähigkeit zum Erfassen der räumlichen Position einer Vielzahl von entfernten Knoten bereitstellt.

6. Netzwerk nach Anspruch 5, wobei die Erfassungsanordnung eine RF-Antenne oder ein optisches phasengesteuertes Array beinhaltet.

## Revendications

1. Réseau maillé optique en espace libre comprenant :
Trois, ou plus, nœuds, chaque nœud (102) ayant :
un orifice de communication optique (206) et au moins un orifice de suivi (212a à 212d) pour fournir une capacité de saut de faisceau optique,
un processeur de réseau (308),
un terminal RF (304) et
un dispositif de commande de nœud de réseau (302),
dans lequel chaque nœud est configuré pour être connecté à au moins deux nœuds distants (104/106) à l'aide d'une liaison optique ;
une topologie de réseau définissant une configuration de liaisons de trafic entre les trois,
ou plus, nœuds, dans laquelle au moins deux des nœuds sont configurés pour être connectés de telle sorte qu'un trajet de données soit établi parmi les nœuds connectés ;
dans lequel le réseau est configuré pour communiquer des états des nœuds et des états des liaisons de trafic entre les trois, ou plus, nœuds sur un réseau RF formé entre chacun des terminaux RF ;
dans lequel chaque processeur de réseau (308) est configuré pour participer à un calcul distribué de routes primaire et de secours pour la topologie et pour stocker les résultats du calcul distribué ; et
dans lequel, si un affaiblissement de liaison de trafic ou un affaiblissement de nœud est détecté par le biais du réseau RF au niveau de l'un des nœuds, le processeur de réseau dudit nœud est configuré pour donner comme instruction au dispositif de commande de nœud dudit nœud de passer la configuration de liaisons de trafic de la topologie de la route primaire à l'une des routes de secours, et
dans lequel le dispositif de commande de nœud est configuré pour ajuster la configuration des liaisons de trafic entre les trois, ou plus, nœuds dans la topologie de réseau pour réacheminer des données de trafic autour de l'affaiblissement.

2. Réseau selon la revendication 1, dans lequel la configuration des liaisons de trafic entre les trois, ou plus, nœuds dans la topologie de réseau est basée sur un facteur sélectionné dans le groupe constitué :
par une demande de trafic en temps réel ;
des conditions environnementales ;
l'état du ou des nœuds ; et
l'état de la ou des liaisons optiques.

3. Réseau selon la revendication 1, dans lequel chaque nœud comprend en outre un réseau à commande de phase optique pour orienter électroniquement des directions de réception et de faisceau d'émission.

4. Réseau selon la revendication 1, dans lequel chaque nœud est configuré pour suivre de manière spatiale une pluralité de nœuds distants et chaque nœud est configuré pour transmettre des balises de suivi qui doivent être suivies par une pluralité de nœuds distants.

5. Réseau selon la revendication 1, dans lequel chaque nœud comprend en outre un ensemble d'acquisition fournissant une capacité à acquérir la position spatiale d'une pluralité de nœuds distants.

6. Réseau selon la revendication 5, dans lequel l'ensemble d'acquisition comprend une antenne RF ou un réseau à commande de phase optique.
